# EUROPEAN PATENT APPLICATION

(11) **EP 4 327 988 A1**
(43) Date of publication of application: **28.02.2024**
(21) Application number: 22895267.7
(22) Date of filing: 06.10.2022
(51) Int. Cl.: B25J 15/04

(54) **TOOL CHECKING DEVICE FOR ROBOT ARM, TOOL CHECKING PROGRAM, AND TOOL CHECKING METHOD**

(30) Priority: 18.11.2021 JP 2021187595
(71) Applicant: MAYEKAWA MFG. CO., LTD., Tokyo 135-8482 (JP)
(72) Inventor: TOKUMOTO, Masaru, Tokyo 135-8482 (JP); YAMASHITA, Tomoki, Tokyo 135-8482 (JP); KIMURA, Kenichiro, Tokyo 135-8482 (JP); HIRAYAMA, Junta, Tokyo 135-8482 (JP)
(74) Representative: Regimbeau
(86) International application number: PCT/JP2022/037477
(87) International publication number: WO 2023/089981

(57) **Abstract**

A tool check device for robot arm, includes: a movement control unit configured to control a robot arm such that a tool to be attached to the robot arm is arranged at a first axis coordinate, of a three-dimensional coordinate system, according to a tool condition concerning at least either of a type or a state of the tool in an inspection space defined as the three-dimensional coordinate system; a distribution data acquisition unit configured to acquire distribution data, of an object in the inspection space, indicated by a combination of a second axis coordinate and a third axis coordinate of the three-dimensional coordinate system, after the control by the movement control unit; and a determination unit configured to determine whether the tool condition is satisfied, based on the distribution data.

## Description

### TECHNICAL FIELD

The present disclosure relates to a tool check device, a tool check program, and a tool check method for robot arm.

### BACKGROUND

Conventionally, a robot arm is known to which a tool for processing or operating an object is interchangeably attached. For example, in a robot arm disclosed in Patent Document 1, any of a plurality of types of tools is attached to the robot arm depending on, for example, processing with respect to an object. The above-described robot arm can grip the object by opening and closing the tool.

### Citation List

### Patent Literature

Patent Document 1: JP2018-158405A

### SUMMARY

### Technical Problem

In order to properly perform an operation such as the processing by the above-described robot arm, it is necessary to satisfy tool conditions that the attached tool is of an appropriate type and the attached tool is in an appropriate state (for example, an open state or a closed state) depending on processing to be performed. In this respect, Patent Document 1 does not disclose a specific configuration for accurately determining whether the tool conditions are satisfied.

The object of the present disclosure is to provide a tool check device, a tool check program, and a tool check method for robot arm, which are capable of accurately determining whether a tool condition is satisfied.

### Solution to Problem

A tool check device for robot arm according to at least one embodiment of the present disclosure, includes: a movement control unit configured to control a robot arm such that a tool to be attached to the robot arm is arranged at a first axis coordinate, of a three-dimensional coordinate system, according to a tool condition concerning at least either of a type or a state of the tool in an inspection space defined as the three-dimensional coordinate system; a distribution data acquisition unit configured to acquire distribution data, of an object in the inspection space, indicated by a combination of a second axis coordinate and a third axis coordinate of the three-dimensional coordinate system, after the control by the movement control unit; and a determination unit configured to determine whether the tool condition is satisfied, based on the distribution data.

A tool check program for robot arm according to at least one embodiment of the present disclosure, is configured to cause a computer to implement: a movement control step of controlling the robot arm such that a tool to be attached to the robot arm is arranged at a first axis coordinate, of a three-dimensional coordinate system, according to a tool condition concerning at least either of a type or a state of the tool in an inspection space defined as the three-dimensional coordinate system; a distribution data acquisition step of acquiring distribution data, of an object in the inspection space, indicated by a combination of a second axis coordinate and a third axis coordinate of the three-dimensional coordinate system, after the movement control step; and a determination step of determining whether the tool condition is satisfied, based on the distribution data.

A tool check method for robot arm according to at least one embodiment of the present disclosure, includes: a movement control step of controlling a robot arm such that a tool to be attached to the robot arm is arranged at a first axis coordinate, of a three-dimensional coordinate system, according to a tool condition concerning at least either of a type or a state of the tool in an inspection space defined as the three-dimensional coordinate system; a distribution data acquisition step of acquiring distribution data, of an object in the inspection space, indicated by a combination of a second axis coordinate and a third axis coordinate of the three-dimensional coordinate system, after the movement control step; and a determination step of determining whether the tool condition is satisfied, based on the distribution data.

### Advantageous Effects

According to the present disclosure, it is possible to provide a tool check device, a tool check program, and a tool check method for robot arm, which are capable of accurately determining whether a tool condition is satisfied.

### BRIEF DESCRIPTION OF DRAWINGS

FIG. 1 is a conceptual diagram showing a work processing system according to an embodiment.
FIG. 2 is a conceptual explanatory view of an inspection space according to an embodiment.
FIG. 3 is a conceptual diagram showing a process of acquiring corresponding distribution data according to an embodiment.
FIG. 4A is a conceptual view showing a determination method regarding a tool condition according to an embodiment.
FIG. 4B is another conceptual view showing the determination method regarding the tool condition according to an embodiment.
FIG. 5 is a conceptual view showing a photographing range according to a posture of a 3D camera according to an embodiment.
FIG. 6 is a conceptual diagram showing an electrical configuration of a tool check device according to an embodiment.
FIG. 7 is a flowchart of a tool check process according to an embodiment.
FIG. 8 is a flowchart of a determination process according to an embodiment.

### DETAILED DESCRIPTION

Some embodiments of the present invention will be described below with reference to the accompanying drawings. It is intended, however, that unless particularly specified, dimensions, materials, shapes, relative positions and the like of components described or shown in the drawings as the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a tubular shape shall not be construed as only the geometrically strict shape, but also includes a shape with unevenness or chamfered corners within the range in which the same effect can be achieved.

On the other hand, an expressions such as "comprising", "including", "having", "containing", or "constituting" one constitutional element are not intended to be exclusive of other constitutional elements.

### <1. Overview of work processing system 1>

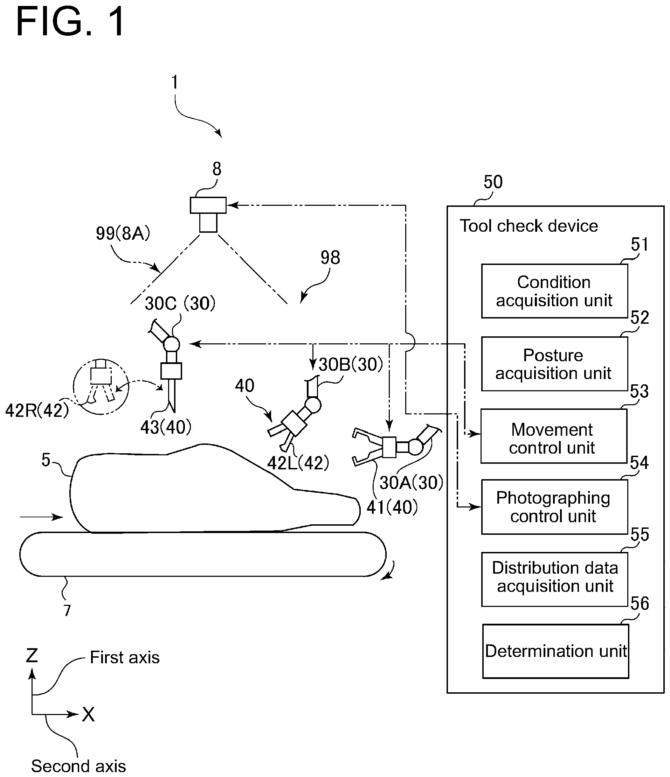

The overall of a work processing system 1 according to an embodiment of the present disclosure will be exemplified with reference to FIG. 1. FIG. 1 is a conceptual diagram showing the work processing system 1 according to an embodiment of the present disclosure.

The work processing system 1 is configured to process a work 5 by using a tool 40 attached to a robot arm 30. The work 5 of the present embodiment is food such as an agricultural product, a livestock product, or a marine product. The food may be either fresh food or processed food. The processing with respect to the work 5 is, for example, cutting, clamping, chucking, or a combination thereof with respect to the work 5. The processing with respect to the work 5 according to another embodiment may be pressing, hitting, ejection of a fluid, irradiation of light, or the like with respect to the work 5.

The work processing system 1 according to an embodiment of the present disclosure includes a conveying device 7 for conveying the work 5, the robot arm 30 for processing the work 5, and a 3D camera 8 configured to photograph the work 5 conveyed by the conveying device 7, and a tool check device 50 for robot arm (hereinafter, may simply be referred to as the "tool check device 50"). The conveying device 7 is a belt conveyor for conveying the work 5 in the horizontal direction. The robot arm 30 is an industrial robot realized by a vertical articulated robot, a horizontal articulated robot, or a combination thereof. The tool 40 for processing the work 5 is attached to the robot arm 30. The robot arm 30 of the present example includes robot arms 30A, 30B, 30C configured to operate in conjunction with each other. In another embodiment, the device to which the tool 40 for processing the work 5 is attached may not be the robot arm 30, but may be, for example, a cutting machine, a clamping device, or the like with a simpler configuration.

The tool 40 of the present embodiment includes a clamper 41 for gripping the work 5, a chuck 42 for chucking the work 5, and a knife 43 for cutting the work 5. Further, the chuck 42 includes mutually symmetrical chucks 42L, 42R. Both the clamper 41 and the chuck 42 are connected to an actuator (not shown) which may be an air cylinder, a hydraulic cylinder, a motor, or the like, and are configured to open and close by driving the actuator. Further, the tool 40 of the present example is selectively attached to the robot arm 30. Specifically, the clamper 41, the chuck 42, and the knife 43 are each selectively attached to any of the robot arms 30A, 30B, 30C. For example, in an embodiment where the work 5 is livestock leg meat, which tool 40 is attached to the robot arm 30 is determined depending on whether the work 5 is left leg meat or right leg meat.

In the present embodiment, the robot arm 30 processes the work 5 based on an image of the work 5 photographed by the 3D camera 8. More specifically, a processing position for the work 5 is identified based on the image photographed by the 3D camera 8, and the robot arm 30 is controlled based on the identified result. A controller (not shown) for controlling the robot arm 30 during processing of the work 5 may be the same control device as the tool check device 50, or may be a different control device.

The 3D camera 8 of the present embodiment is configured to photograph not only the work 5 but also the robot arm 30 to which the tool 40 is attached. The tool 40 and the robot arm 30 may be photographed when the work 5 is placed on the conveying device 7, or may be photographed at another timing. Alternatively, the robot arm 30 may not be photographed.

The tool check device 50 according to an embodiment of the present disclosure is configured to check whether a tool condition is satisfied. The tool condition is a condition concerning at least either of a type or a state of the tool 40 to be attached to the robot arm 30. The tool condition of the present embodiment is set corresponding to each of the robot arms 30A, 30B, and 30C. For example, if the clamper 41 in an open state is to be attached to the robot arm 30A, the tool type and the tool state corresponding to the robot arm 30A are the "clamper 41" and the "open state", respectively. To give another example, if the chuck 42L in the open state is to be attached to the robot arm 30B, the tool type and the tool state corresponding to the robot arm 30B are the "chuck 42L" and the "open state", respectively.

The tool condition is not satisfied, for example, if an operator makes an error in attaching the tool 40. As a more specific example, the tool type is not satisfied if the tool 40 of a different type from the tool 40 to be attached is erroneously attached to the robot arm 30. To give another example, an error may occur in an operation of connecting the air cylinder as the actuator and the clamper 41 by using an air pipe. In this case, the clamper 41 enters the closed state although the clamper 41 should enter the open state during the operation of the air cylinder, and the tool state is not satisfied. To give still another example, the tool state is not satisfied if the tool 40 is attached in a reverse attachment posture in the up-down direction.

In another embodiment, the tool 40 may be attached by a robot instead of the operator. Further, only one of the clamper 41, the chuck 42, or the knife 43 may be prepared as the tool 40. Therefore, only one robot arm 30 may be installed.

### <2. Details of tool check device 50>

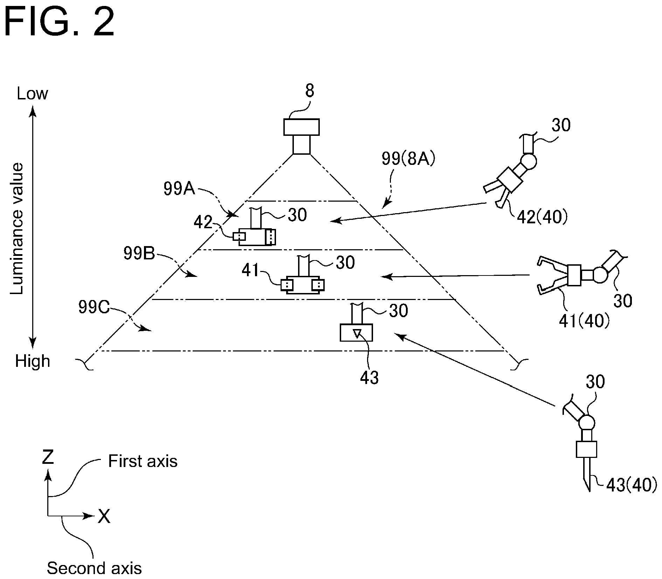

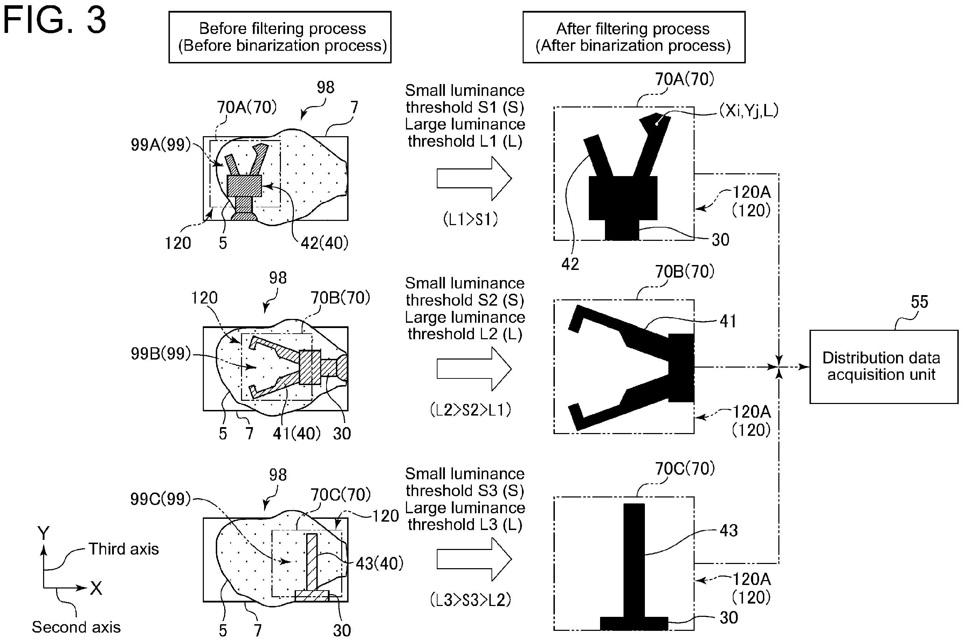

Details of the tool check device 50 according to an embodiment of the present disclosure will be exemplified with reference to FIGs. 1 to 5. FIG. 2 is a conceptual explanatory view of an inspection space 99 according to an embodiment of the present disclosure. FIG. 3 is a conceptual diagram showing a process of acquiring corresponding distribution data 120A according to an embodiment of the present disclosure.

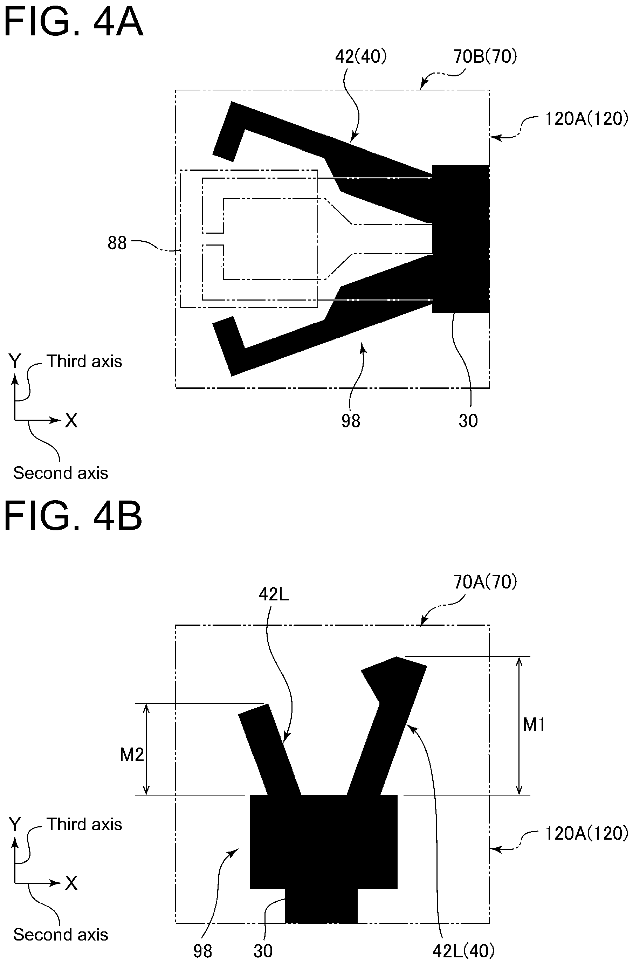

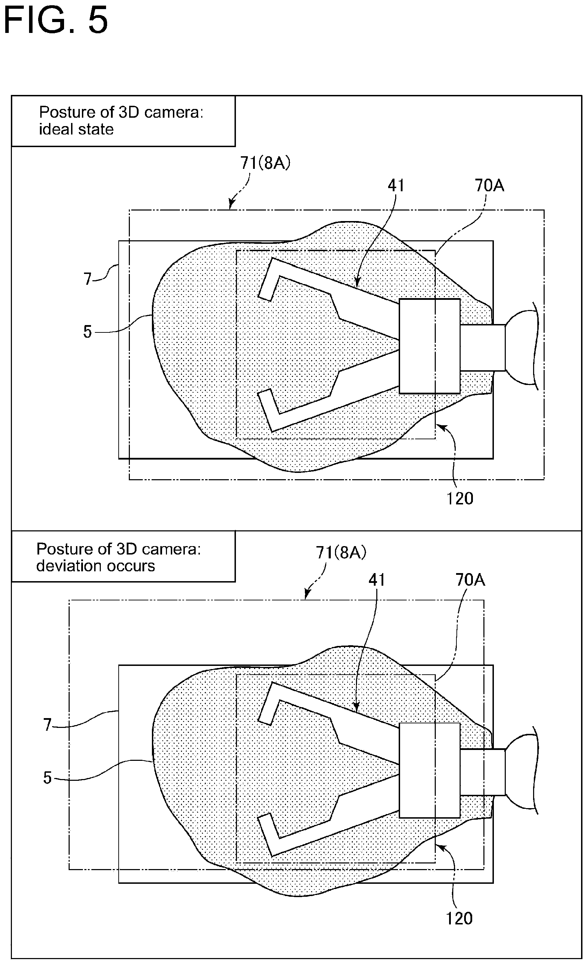

FIG. 4A is a conceptual view showing a determination method regarding the tool condition according to an embodiment of the present disclosure. FIG. 4B is another conceptual view showing the determination method regarding the tool condition according to an embodiment of the present disclosure. FIG. 5 is a conceptual view showing a photographing range 8A according to a posture of the 3D camera 8 according to an embodiment of the present disclosure.

In the embodiment illustrated in FIG. 1,2, the inspection space 99 defined as a three-dimensional coordinate system including mutually orthogonal X, Y, and Z axes is used to determine whether the tool condition is satisfied. The inspection space 99 is the photographing range 8A of the 3D camera 8 as an example. The Z axis is parallel to an optical axis direction of the 3D camera 8 and extends along the vertical direction. The X axis and the Y axis extend along the horizontal direction. In the following description, the Z axis may be referred to as the "first axis", and the X axis and the Y axis may be referred to as the "second axis" and the "third axis", respectively.

### <2-1. Basic components of tool check device 50>

As illustrated in FIG. 1, the tool check device 50 includes a condition acquisition unit 51 for acquiring the tool condition, a movement control unit 53 for controlling the robot arm 30, a photographing control unit 54 for controlling the 3D camera 8, a distribution data acquisition unit 55 for acquiring distribution data 120 (see FIG. 3) described later, and a determination unit 56 for determining whether the tool condition is satisfied. Hereinafter, details of these components will be exemplified.

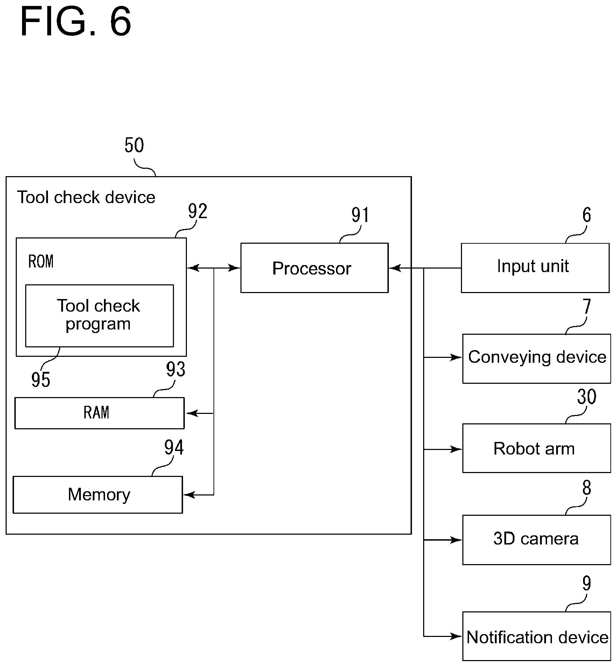

The condition acquisition unit 51 is configured to acquire the tool condition based on an input operation by the operator of the work processing system 1, for example. In another embodiment, the tool condition may be acquired based on an instruction included in a tool check program 95 (see FIG. 6) read out by the tool check device 50.

The movement control unit 53 is configured to control the robot arm 30 such that the tool 40 is arranged at a first axis coordinate according to the tool condition acquired by the condition acquisition unit 51, in the inspection space 99. The inspection space 99 illustrated in FIG. 2 includes three inspection spaces 99A, 99B, and 99C divided into three in order from the 3D camera 8 side along a first axis direction (vertical direction). The movement control unit 53 controls the robot arm 30 such that the chuck 42L, 42R (42), the clamper 41, and the knife 43 are arranged in the inspection spaces 99A, 99B, and 99C, respectively. That is, the inspection spaces 99A, 99B, and 99C are prepared according to the types of the tools 40. In the present embodiment, the tool 40 attached to the robot arm 30 changes according to a processing condition of the work 5, and thus a moving path of the robot arm 30 also changes according to the processing condition of the work 5.

In another embodiment, the movement control unit 53 may control the robot arm 30 such that the different types of tools 40 are arranged in the inspection space 99A, for example. Alternatively, the inspection space 99 may be prepared according to the tool state of the tool 40.

In the present embodiment, it is sequentially determined whether the tool condition is satisfied for the tools 40 attached to the robot arms 30A, 30B, 30C, respectively. More specifically, the tool 40 attached to the robot arm 30A first moves to the inspection space 99, and it is determined whether the tool condition is satisfied. Subsequently, after the robot arm 30A is controlled such that said tool 40 leaves the inspection space 99, it is sequentially determined whether the tool conditions are satisfied for the tools 40 attached to the remaining robot arms 30B and 30C.

Other objects including at least part of the robot arm 30 and at least part of the work 5 are arranged in the inspection space 99 of the present embodiment, in addition to the above-described inspection spaces 99A to 99C. Spaces in which the robot arm 30 is arranged are the inspection spaces 99A to 99C. A space in which the work 5 is arranged is located below the inspection space 99C of the inspection space 99. Further, another object may be arranged in the inspection space 99. In the following description, objects arranged inside the inspection space 99 may simply be referred to as an "object 98" when they are collectively referred to. That is, the object 98 of the present embodiment is a concept including the tool 40, the robot arm 30, and the work 5.

Returning to FIG. 1, the photographing control unit 54 is configured to control the 3D camera 8 and acquire photographed image data, after the control by the movement control unit 53. In the present embodiment, the photographing range 8A of the 3D camera 8 coincides with the inspection space 99. In addition to a function of photographing the object 98 to be photographed, the 3D camera 8 has a function of measuring a photographing distance which is a distance from the object 98 to the 3D camera 8. As an example, the 3D camera 8 is a stereo camera including two lenses. The object 98 appears in each of a first captured image generated based on light collected by one lens and a second captured image generated based on light collected by the other lens. Image regions in which the object 98 appears are different in each of the captured images, and the photographing distance can be calculated based on a relative positional relationship between these image regions.

In the present embodiment, in order to identify the relative positional relationship between the image regions in which the object 98 appears, a search process is performed to search the second captured image for the same object as the object 98 appearing in the first captured image. In the present example, PatchMatch is adopted as this search process to improve efficiency of the search process. As a search process according to another embodiment, a so-called exhaustive search type algorithm may be adopted which compares each of a plurality of pixels forming the first captured image with each of a plurality of pixels forming the second captured image. Further, the 3D camera 8 for measuring the photographing distance may be, instead of a stereo camera, a three-dimensional shape measurement camera adopting a light section method or may be a ToF camera (Time-of-Flight Camera).

Photographed image data indicating a photographed image 70 which is an image generated by the 3D camera 8 will be described with reference to FIG. 3. In the figure, a photographed image 70A of the clamper 41, a photographed image 70B of the chuck 42, and a photographed image 70C of the knife 43 are illustrated as the photographed images 70 photographed if the tool condition is satisfied. The photographed images 70A to 70C (70) are generated by performing a crop process of cutting out a part of an initial original photographed image generated by the 3D camera 8 (details will be described later). A region to be cropped differs according to the type of tool 40 to be photographed. However, image sizes of the photographed images 70A to 70C are the same.

Each of the at least two pixels forming the photographed image 70 indicated by the photographed image data is indicated by (Xi, Yj) which are a combination of a second axis coordinate and a third axis coordinate (i is any natural number not greater than the number of pixels in the longitudinal direction of the photographed image 70 and j is any natural number not greater than the number of pixels in the lateral direction of the photographed image 70). Therefore, the photographed image data indicating the photographed image 70 in which the object 98 appears is understood as the distribution data 120, of the object 98 in the inspection space 99, indicated by the combination of the second axis coordinate (Xi) and the third axis coordinate (Yi). The distribution data 120 indicates the distribution of the objects 98 in the photographed image 70.

In the present embodiment, each of the plurality of pixels forming the photographed image 70 indicated by the photographed image data serving as the distribution data 120 is assigned a luminance value (L) correlated with the photographing distance. Therefore, the photographed image 70 indicated by the photographed image data serving as the distribution data 120 can also be understood as a depth map in the photographing range 8A with the 3D camera 8 as the viewpoint. The luminance value assigned to each pixel decreases as the photographing distance decreases. That is, the object 98 appears black in the photographed image 70. Therefore, as shown on a left side of FIG. 3, among the tools 40 respectively appearing in the photographed images 70A, 70B, and 70C, the chuck 42 appearing in the photographed image 70A has a lowest luminance value and the knife 43 appearing in the photographed image 70C has a highest luminance value. In FIG. 3, the tools 40 with lower luminance values are hatched more finely. A pixel of the photographed image 70 in which the object 98 does not appear is assigned a maximum luminance value.

The distribution data acquisition unit 55 is configured to acquire the distribution data 120 included in the photographed image data acquired by the photographing control unit 54. The distribution data acquisition unit 55 may acquire the corresponding distribution data 120A (described later) generated by performing a filtering process on the distribution data 120, or may acquire the distribution data 120 that has not undergone the filtering process.

Returning to FIG. 1, the determination unit 56 is configured to determine whether the tool condition is satisfied, based on the distribution data 120 acquired by the distribution data acquisition unit 55. A difference between assumed distribution data assumed when the tool condition is satisfied and the distribution data 120 acquired by the distribution data acquisition unit 55 changes depending on whether the tool condition is satisfied. For example, the distribution data 120 acquired by the distribution data acquisition unit 55 deviates more than the assumed distribution data, if the clamper 41 is attached at a position deviated from at a prescribed position in the robot arm 30 even though the chuck 42 should be attached at the prescribed position. Therefore, the data difference exceeds a threshold, and the determination unit 56 determines that the tool type is not satisfied. To give another example, assume that the clamper 41 in the closed state is attached to the robot arm 30A, even though the clamper 41 in the open state should be attached to the robot arm 30A. In this case, an actual shape of the clamper 41 is significantly different from an assumed shape. That is, the distribution data 120 acquired by the distribution data acquisition unit 55 deviates greatly from the assumed distribution data. In this case, the determination unit 56 determines that the tool state is not satisfied. A more detailed description of the determination process performed by the determination unit 56 will be given later.

With the above configuration, the distribution data 120 is determined according to the position and the shape of the object 98 in the inspection space 99. Since the movement control unit 53 controls the robot arm 30 such that the tool 40 moves to the first axis coordinate according to the tool condition to be satisfied, the acquired distribution data 120 changes greatly depending on whether the tool 40 satisfying the tool condition is arranged as the object 98 in the inspection space 99. Therefore, the determination unit 56 can accurately determine whether the tool condition is satisfied. In view of the foregoing, the tool check device 50 is realized which can accurately determine whether the tool condition is satisfied.

### <2-3. Acquisition process performed by distribution data acquisition unit 55>

Details of the acquisition process of the distribution data 120 performed by the distribution data acquisition unit 55 according to an embodiment of the present disclosure will be exemplified with reference to FIG. 3. In addition to the tool 40 to be checked, the another object 98 such as the work 5 may be arranged in the photographing range 8A which is the inspection space 99. In this case, since the another object 98 other than the tool 40 appears in the photographed image 70, the distribution data 120 of the another object 98 is included as noise in the distribution data 120 which is the photographed image data. In the present embodiment, the distribution data acquisition unit 55 is configured to perform the filtering process to extract the distribution data 120 at the first axis coordinate according to the tool condition, by utilizing the principle that the tool 40 to be checked and the another object 98 are arranged at mutually different first axis coordinates. The distribution data 120 at the first axis coordinate corresponding to the tool condition (hereinafter, referred to as the corresponding distribution data 120A) is extracted by the filtering process from the distribution data 120 serving as the photographed image data indicating the photographed image 70. That is, the distribution data 120 that becomes noise is removed. A more detailed description of the filtering process will be given later.

With the above configuration, the distribution data 120 as noise that may affect the determination result as to whether the tool condition is satisfied is removed by performing the filtering process. Accordingly, the tool check device 50 can more accurately determine whether the tool condition is satisfied.

Further, the distribution data 120 is data included in the photographed image data of the object 98 generated by the 3D camera 8 having the photographing range 8A as the inspection space 99. Furthermore, the distribution data 120 associates the luminance value with each of the plurality of pixels forming the photographed image 70 indicated by the combination of the second axis coordinate (Xi in the present example) and the third axis coordinate (Yj in the present example). With the above configuration, the movement control unit 53 controls the robot arm 30 such that the tool 40 is arranged at the first axis coordinate according to the tool condition. Therefore, the distribution data 120 that associates the pixels of the photographed image 70 with the luminance value correlated with the photographing distance which is the distance from the object 98 to the 3D camera 8 changes greatly depending on whether the tool condition is satisfied. Accordingly, the tool check device 50 can more accurately determine whether the tool condition is satisfied.

For example, in an embodiment where the tool attaching position in the robot arm 30 differs in the first axis direction depending on the type of the tool 40, the luminance value of the distribution data 120 changes depending on whether the tool type is satisfied. More specifically, the chuck 42 is arranged at a position deviated from the inspection space 99B in the first axis direction during photographing by the 3D camera 8, if the chuck 42 is attached to the robot arm 30 even though the tool type is the clamper 41. Therefore, the deviation of the chuck 42 in the first axis direction is reflected in the luminance value associated with the distribution data 120. Accordingly, the determination unit 56 can accurately determine whether the tool type is satisfied.

In the present embodiment, since the inspection spaces 99A, 99B, 99C are aligned in the first axis direction (see FIG. 2), the luminance value of the object 98 appearing in the photographed image 70 changes depending on which of the inspection spaces 99A, 99B, 99C the object 98 is arranged. The distribution data acquisition unit 55 illustrated in FIG. 3 utilizes this principle to perform a binarization process which is an example of the filtering process on the distribution data 120 serving as the photographed image data. More specifically, the distribution data acquisition unit 55 is configured to perform the binarization process on the photographed image data by using a large luminance threshold L and a small luminance threshold S according to the tool condition, and is configured to acquire the above-described corresponding distribution data 120A. The large luminance threshold L and the small luminance threshold S of the present embodiment are prepared according to the tool type of the tool condition. More specifically, the large luminance threshold L and the small luminance threshold S are prepared corresponding to the inspection spaces 99A to 99C each having a one-to-one relationship with the tool type. In the present example, a large luminance threshold L1 and a small luminance threshold S1 are prepared such that the binarization process of extracting an image with the luminance value of the object 98 arranged in the inspection space 99A is performed. If the binarization process using the large luminance threshold L1 and the small luminance threshold S1 is performed, the photographed image data is extracted where only the object 98 arranged in the inspection space 99A (see FIG. 2) appears, and the photographed image data is removed where the object 98 appears which is located at the position deviated from the inspection space 99A to the first axis coordinate. Likewise, a large luminance threshold L2 and a small luminance threshold S2 are prepared corresponding to the inspection space 99B, and a large luminance threshold L3 and a small luminance threshold S3 are prepared corresponding to the inspection space 99C. The magnitude relationship between the large luminance thresholds L1 to L3 (L) and the small luminance thresholds S1 to S3 (S) is as shown in FIG. 3.

An example of the binarization process using the large luminance threshold L1 and the small luminance threshold S1 will be described. The photographed image data of the work 5 which is an example of the another object 98 located at the position deviated from the inspection space 99A in the first axis direction is removed by performing the binarization process. That is, the distribution data 120 of the work 5, which may induce an erroneous determination by the determination unit 56, is removed. The photographed image data (distribution data 120) that has undergone the binarization process is acquired as the corresponding distribution data 120A by the distribution data acquisition unit 55. Thereafter, the determination unit 56 determines whether the tool condition is satisfied, based on the corresponding distribution data 120A.

With the above configuration, the photographed image data which includes only the pixel assigned with luminance within a range defined by the large luminance threshold L and the small luminance threshold S among the pixels of the photographed image 70 indicated by the combination of the second axis coordinate and the third axis coordinate is acquired as the corresponding distribution data 120A. Consequently, the distribution data 120 as noise of the another object 98 other than the tool 40 included in the photographed image data is removed. The determination unit 56 determines whether the tool condition is satisfied, based on the corresponding distribution data 120A. Accordingly, the tool check device 50 can accurately determine whether the tool condition is satisfied.

### <2-4. Details of determination process performed by determination unit 56>

First, second, and third specific examples of the determination process performed by the determination unit 56 according to an embodiment of the present disclosure will be described with reference to FIGs. 4A and 4B.

### <2-4-1. First specific example of determination process>

The first specific example of the determination process will be described with reference to FIG. 4A. In the first specific example, it is determined whether the tool type (chuck 42) is satisfied. The determination unit 56 identifies a distribution area of the object 98 appearing in the photographed image 70B, based on the corresponding distribution data 120A which is the photographed image data of the photographed image 70B (70) that has undergone the binarization process. The distribution area correlates with the shape of the object 98 as viewed in the first axis direction. Therefore, the distribution area satisfies a prescribed condition (for example, the distribution area has a value not less than a prescribed value) if the object 98 is the chuck 42. Whereby, the determination unit 56 can determine that the tool type is satisfied. Meanwhile, if the tool 40 other than the clamper 41 is attached to the robot arm 30, the tool 40 is arranged at the position deviated from the inspection space 99B (see FIG. 2), and thus does not appear in the photographed image 70B that has undergone the binarization process. That is, the distribution area does not satisfy the prescribed condition (for example, the distribution area has a value less than the prescribed value), allowing the determination unit 56 to determine that the tool type is not satisfied.

Even if the tool 40 attached to the robot arm 30 is the chuck 42, the distribution area does not satisfy the prescribed condition in case the chuck 42 is damaged. Also, the distribution area does not satisfy the prescribed condition either if the tool 40 is not attached to the robot arm 30. That is, the determination method described in the first specific example is also applicable to determine whether the tool state is satisfied. Further, in another situation, the same determination result is also obtained by applying the determination method described as the first specific example to the photographed image data (distribution data 120) before the binarization process is performed. In addition, the tool 40 may cause halation in the photographed image 70 due to an upside down attachment posture of the tool 40. For example, if the attachment position is upside down even though the knife 43 should be attached such that a blade is arranged on the lower side, the blade is arranged on the upper side, easily causing halation (not shown). In this case, it is difficult for the knife 43 to appear in the photographed image 70 before the filtering process is performed, and the above-described distribution area becomes extremely small. That is, the distribution area does not satisfy the prescribed condition. Therefore, if the attachment posture of the knife 43 is upside down, it is determined that the tool state is not satisfied.

With the above configuration, the determination unit 56 determines whether the tool condition is satisfied, based on the distribution area of the object 98 indicated by the distribution data 120. Since the distribution area of the object 98 changes greatly depending on whether the tool condition is satisfied, the tool check device 50 can simplify the process of determining whether the tool condition is satisfied.

### <2-4-2. Second specific example of determination process>

Subsequently, the second specific example of the determination process will be described with reference to FIG. 4A. In the second specific example, it is determined whether the tool state (open state) of the chuck 42 is satisfied. The determination unit 56 identifies a limited region 88 based on a centroid position of a distribution region indicated by the corresponding distribution data 120A. Thereafter, the determination unit 56 determines whether the tool state is satisfied, based on the distribution area in the limited region 88. The limited region 88 is a part of the photographed image 70B (70) that has undergone the binarization process, and is a region where the distribution area changes depending on whether the tool state is satisfied. For example, the determination unit 56 regards, as the limited region 88, a region which is in a prescribed positional relationship with the centroid position of the distribution region indicated by the corresponding distribution data 120A. In the limited region 88 illustrated in FIG. 4A, the chuck 42 in the open state is not arranged and at least part of the chuck 42 in the closed state is arranged (the chuck 42 in the closed state is virtually illustrated by double-dotted chain lines). The determination unit 56 determines whether the tool state is satisfied, depending on whether the distribution area in the limited region 88 satisfies the prescribed condition.

The determination method described as the second specific example is also applicable to determine whether the tool type is satisfied. For example, if the region where the distribution area changes depending on whether the tool type is satisfied is set in advance as the limited region 88, the determination unit 56 can determine, by a similar method, whether the tool type is satisfied.

With the above configuration, if the centroid position of the distribution region where the tool condition is satisfied and the limited region 88 where the distribution area changes depending on whether the tool condition is satisfied are set in association with each other, the determination unit 56 can determine whether the tool condition is satisfied, based on the distribution area in the limited region 88. Accordingly, the determination unit 56 can make the appropriate determination according to the tool condition to be determined.

### <2-4-3. Third specific example of determination process>

The third specific example of the determination process by the determination unit 56 will be described with reference to FIG. 4B. In the third specific example, it is determined whether the tool type (chuck 42L) is satisfied. The chuck 42L has an asymmetrical shape. In the example of FIG. 4B, a length (dimension M1) of the chuck 42L in the third axis direction on one side in the second axis direction is greater than a length (dimension M2) of the chuck 42L in the third axis direction on another side in the second axis direction.

The determination unit 56 is configured to determine whether the tool condition is satisfied, based on a relationship between the third axis coordinate and the length in the second axis direction of the distribution region indicated by the corresponding distribution data 120A. More specifically, the determination unit 56 estimates the distribution region of the chuck 42L from the distribution region indicated by the corresponding distribution data 120A (the distribution region of the robot arm 30 and the chuck 42L in the example of FIG. 4B). This estimation process can be set in advance based on the shapes of the robot arm 30 and the chuck 42L. Thereafter, the determination unit 56 identifies a maximum dimension of each of the one side and the another side in the second axis direction in the distribution region of the chuck 42L. It is determined that the tool type (chuck 42L) is satisfied if the magnitude relationship between the maximum dimensions satisfies the prescribed condition. On the other hand, if the chuck 42R which has a symmetrical shape with the chuck 42L is erroneously attached, the magnitude relationship of the maximum dimensions described above is reversed and the prescribed condition is not satisfied, allowing the determination unit 56 to determine that the tool type is not satisfied.

The determination method described as the third specific example is also applicable to determine whether the tool state is satisfied. For example, this determination method can be applied if the tool 40 is used in which the magnitude relationship between the maximum dimensions described above is switched according to the tool state.

With the above configuration, if the relationship between the second axis coordinate and the length in the third axis direction of the distribution region in which the tool condition is satisfied is set in advance, the determination unit 56 can determine whether the tool condition is satisfied, based on this relationship. Accordingly, the determination unit 56 can make the appropriate determination according to the tool condition to be determined.

### <2-5. Additional components of tool check device 50>

Additional components of the tool check device 50 will be described with reference to FIGs 1 and 5. The tool check device 50 includes a posture acquisition unit 52 configured to acquire posture data indicating the posture of the 3D camera 8. When the 3D camera 8 is mounted in the work processing system 1, the posture of the 3D camera 8 may deviate from an ideal posture due to, for example, a variation in attachment operation or dimensional tolerance of a mounting part. The posture acquisition unit 52 acquires posture data in order to identify the amount of the deviation.

An example of a method for acquiring the posture data is as follows. A plate (not shown) is prepared which is in a prescribed positional relationship with respect to an origin position of the position/posture of the robot arm 30. This plate may be installed according to a timing at which position/posture data is acquired, or may be installed all the time. The 3D camera 8 photographs a plurality of marks shown on a surface of the plate to generate an original photographed image of the plurality of marks. The posture data is acquired by applying a prescribed calculation expression to a positional relationship between the plurality of marks appearing in the original photographed image. The original photographed image is an image which is generated by the 3D camera 8 and has not undergone the crop process.

The distribution data acquisition unit 55 according to an embodiment is configured to identify the photographed image 70 which is a partial region, of the original shot image (see a double-dotted chain line 71 in FIG. 5) photographed by the 3D camera 8, obtained based on the posture data acquired by the posture acquisition unit 52 and is configured to acquire the distribution data 120 in the photographed image 70. That is, the region of the original photographed image, which is subjected to the crop process, changes according to the posture data. Whereby, it is possible to suppress a variation in image region which is based on the photographed image 70 and in which the tool 40 appears.

If the posture of the 3D camera 8 changes, the photographing range 8A of the 3D camera 8 also changes. Therefore, if the distribution data 120 of a fixed partial region in the original photographed image is acquired, the following problems may occur. That is, the determination unit 56 erroneously determines that the tool condition is not satisfied, because at least part of the tool 40 does not appear in the photographed image 70 even though the tool condition is actually satisfied. On the contrary, the determination unit 56 erroneously determines that the tool condition is satisfied, because the inappropriate tool 40 appears in the photographed image 70 even though the tool condition is not actually satisfied. In this respect, with the above configuration, the photographed image 70 is acquired reflecting the deviation in posture of the 3D camera 8, and the distribution data 120 of the photographed image 70 is acquired. Therefore, the tool 40 appears at the prescribed position of the photographed image 70 if the tool condition is satisfied. Further, the tool 40 that should not appear in the photographed image 70 does not appear. Accordingly, the tool check device 50 can more accurately determine whether the tool condition is satisfied.

### <3. Electrical configuration of tool check device 50>

FIG. 6 is a conceptual diagram showing an electrical configuration of the tool check device 50 according to an embodiment of the present disclosure. The work processing system 1 includes a processor 91. The processor 91 is configured to read out the tool check program 95 stored in ROM 92 to load it into RAM 93, and is configured to execute an instruction included in the loaded tool check program 95. The processor 91 is CPU, GPU, MPU, DSP, various kinds of computation devices other than these, or a combination of these. The processor 91 may be implemented by an integrated circuit of PLD, ASIC, FPGA, MCU, and the like. The ROM 92 and the RAM 93 are examples of storage devices. A memory 94 stores various parameters necessary to determine whether the tool condition is satisfied. The various parameters include the large luminance threshold L and the small luminance threshold S. The large luminance threshold L is a threshold greater than the small luminance threshold S.

The processor 91 of the present embodiment is connected to an input unit 6, the conveying device 7, the robot arm 30, the 3D camera 8, and a notification device 9 via an interface. The tool condition is input by the operator through the input unit 6 which may be, for example, a touch panel. The processor 91 acquires the tool condition by acquiring data output from the input unit 6.

The conveying device 7, the robot arm 30, the 3D camera 8, and the notification device 9 of an embodiment each operate in response to a control signal received from the processor 91. The 3D camera 8 performs photographing in response to the received control signal and outputs the generated photographed image data to the processor 91. The notification device 9 is configured to notify the operator if it is determined that the tool condition is not satisfied. The notification device 9 of the present embodiment is an image display device, a speaker, a light emitting device, or a combination thereof.

### <4. Tool check process>

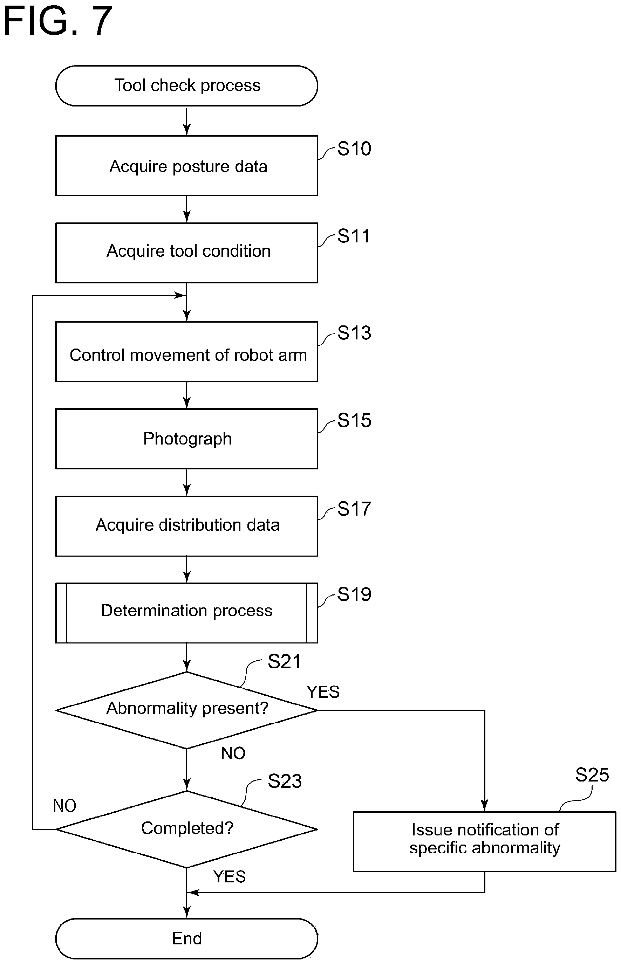

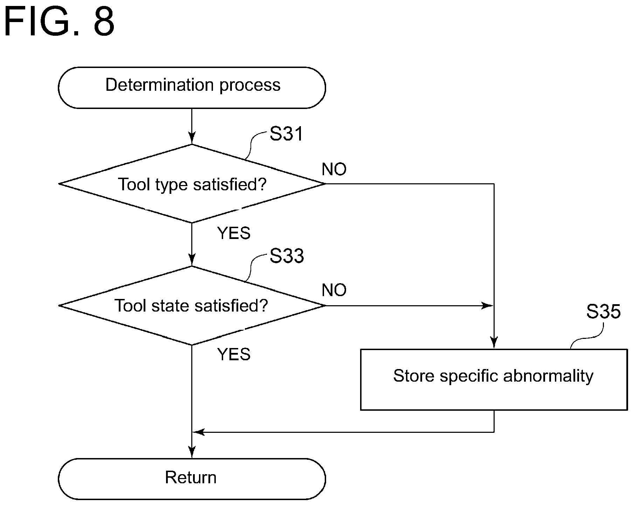

Details of the tool check process according to an embodiment of the present disclosure will be exemplified with reference to FIGs. 7 and 8. The tool check process is a process for determining whether the tool condition is satisfied. In the present embodiment, the processor 91 loads the tool check program 95 stored in the ROM 92 into the RAM 93, thereby performing the following steps. Data processed by the processor 91 as the process is performed is stored in the RAM 93 or the memory 94 as appropriate. In the following description, "step" may be abbreviated as "S".

First, the processor 91 acquires the posture data of the 3D camera 8 by the above-described method (S10). The processor 91 performing S10 functions as the already-described posture acquisition unit 52. Next, the processor 91 acquires the tool condition (S11). In the present example, the operator inputs the tool condition corresponding to each of the robot arms 30A, 30B, and 30C to the input unit 6. The processor 91 performing S11 functions as the already-described condition acquisition unit 51.

The processor 91 controls movement of the robot arm 30 such that the tool 40 is arranged at the first axis coordinate according to the tool condition acquired in S11 (S13). For example, the processor 91 controls movement of the robot arm 30A based on the tool condition associated with the robot arm 30A. Consequently, the tool 40 is arranged in any of the inspection spaces 99A to 99C if the tool 40 is properly attached to the robot arm 30A. The processor 91 performing S13 functions as the already-described movement control unit 53.

The processor 91 controls the 3D camera 8 to acquire the already-described photographed image data (S15). The image indicated by the photographed image data is the original photographed image. The processor 91 performing S15 functions as the already-described photographing control unit 54.

The processor 91 acquires the distribution data 120 included in the photographed image data acquired in S15 (S17). In the present example, the processor 91 performs the crop process on the photographed image data indicating the original photographed image acquired in S15, based on the posture data acquired in S10. Whereby, the processor 91 acquires the photographed image data indicating the photographed image 70. Furthermore, the photographed image data is subjected to the binarization process according to the tool condition acquired in S11, and the processor 91 acquires the corresponding distribution data 120A. The processor 91 performing S17 functions as the already-described distribution data acquisition unit 55.

The processor 91 determines whether the tool condition is satisfied, based on the corresponding distribution data 120A acquired in S17 (S19). The processor 91 performing S19 functions as the already-described determination unit 56. The details of the determination process will be described later.

The processor 91 determines whether there is an abnormality related to the tool 40, based on the determination result of the determination process (S19) (S21). If it is determined that there is no abnormality (S21: NO), the processor 91 determines whether to terminate the tool check process (S23). In the present example, the processor 91 returns the process to S13 if the determination of all the tool conditions respectively corresponding to the robot arms 30A to 30C has not been completed (S23: NO). It is determined whether the tool conditions for the respective robot arms 30A, 30B, and 30C are satisfied, by repeating S13 to S23. The processor 91 terminates the determination process if the determination is completed for all the tool conditions (S23: YES).

The processor 91 controls the notification device 9 to issue a notification of a specific abnormality (S25), if it is determined that there is the abnormality related to the tool 40 (S21: YES). Whereby, the operator can take measures according to the contents of the notification in the work processing system 1 (a specific method for identifying the abnormality will be described later). The processor 91 terminates the tool check process after performing S25.

Details of the determination process will be described with reference to FIG. 8. The processor 91 determines whether the tool type is satisfied, by using any of the already-described methods (S31). The processor 91 stores the specific abnormality (S35) if it is determined that the tool type is not satisfied (S31: NO). For example, the processor 91 stores, in the memory 94, error data indicating that the proper type of tool 40 is not attached to robot arm 30. The error data stored in the memory 94 is used in the notification process of S25 described above. The processor 91 terminates the determination process and returns to the tool check process (see FIG. 7) after performing S25.

The processor 91 determines whether the tool state is satisfied, by using any of the already-described methods (S33), if it is determined that the tool type is satisfied (S31: YES). The processor 91 shifts the process to S35 if it is determined that the tool state is not satisfied (S33: NO). At this time, the processor 91 stores, in the memory 94, error data indicating that the state of the tool 40 is not proper (S35). The processor 91 terminates the determination process if it is determined that the tool state is satisfied (S33: YES).

### <5. Exemplification of another embodiment>

The work processing system 1 of the present disclosure is not limited to including the 3D camera 8 and the photographing control unit 54. For example, instead of the 3D camera 8, an ultrasonic device may be provided. The distribution data 120 can be acquired as long as a distance between the ultrasound device and the object 98 in the inspection space 99 is measured using ultrasonic waves. Further, it is also possible to apply a filtering process of removing distance data of an object having a distance not less than a prescribed value to the distribution data 120 generated by the ultrasonic device. Furthermore, CT scan, MRI, or the like may be adopted, instead of the ultrasonic device.

### <6. Conclusion>

The contents described in some embodiments described above would be understood as follows, for instance.
(1) A tool check device (50) for robot arm according to at least one embodiment of the present disclosure, includes: a movement control unit (53) configured to control a robot arm (30) such that a tool (40) to be attached to the robot arm (30) is arranged at a first axis coordinate, of a three-dimensional coordinate system, according to a tool condition concerning at least either of a type or a state of the tool (40) in an inspection space (99) defined as the three-dimensional coordinate system; a distribution data acquisition unit (55) configured to acquire distribution data (120), of an object (98) in the inspection space (99), indicated by a combination of a second axis coordinate and a third axis coordinate of the three-dimensional coordinate system, after the control by the movement control unit (53); and a determination unit (56) configured to determine whether the tool condition is satisfied, based on the distribution data (120).

With the above configuration 1), the distribution data (120) is determined according to the position and the shape of the object (98) in the inspection space (99). Since the movement control unit (53) controls the robot arm (30) such that the tool (40) moves to the first axis coordinate according to the tool condition to be satisfied, the acquired distribution data (120) changes greatly depending on whether the tool (40) satisfying the tool condition is arranged as the object (98) in the inspection space (99). Therefore, the determination unit (56) can accurately determine whether the tool condition is satisfied. In view of the foregoing, the tool check device (5) for robot arm is realized which can accurately determine whether the tool condition is satisfied.

2) In some embodiments, the tool check device (50) for robot arm as defined in the above 1), wherein the distribution data acquisition unit (55) is configured to perform, on the distribution data (120), a filtering process for extracting corresponding distribution data (120A) which is the distribution data (120) at the first axis coordinate according to the tool condition, and wherein the determination unit (56) is configured to determine whether the tool condition is satisfied, based on the corresponding distribution data (120A).

The distribution data (120) as noise of the another object (98) at a position deviated from the tool (40) in the first axis direction may be included in the initial distribution data (120) acquired by the distribution data acquisition unit (55). In this respect, with the above configuration 2)), the distribution data (120) as the noise is removed by performing the filtering process, allowing the determination unit (50) for robot arm to more accurately determine whether the tool condition is satisfied.

3) In some embodiments, the tool check device (50) for robot arm as defined in the above 1) or 2), wherein the distribution data (120) is data included in photographed image data of the object (98), which is generated by a 3D camera (8) whose photographing range is the inspection space (99), and is data associating each of a plurality of pixels forming a photographed image indicated by the combination of the second axis coordinate and the third axis coordinate with a luminance value correlated with a distance from the object (98) to the 3D camera (8).

With the above configuration 3), since the movement control unit (53) controls the robot arm (30) such that the tool (40) is arranged at the first axis coordinate according to the tool condition, the distribution data (120) that associates the plurality of pixels forming the photographed image (70) with the luminance value correlated with the distance from the object (98) to the 3D camera (8) changes greatly depending on whether the tool condition is satisfied. Accordingly, the tool check device (50) for robot arm can more accurately determine whether the tool condition is satisfied.

4) In some embodiments, the tool check device (50) for robot arm as defined in the above 3), wherein the distribution data acquisition unit (55) is configured to perform a binarization process on the photographed image data generated by the 3D camera (8), by using a large luminance threshold (L) and a small luminance threshold (S) according to the tool condition, and is configured to acquire corresponding distribution data (120A) which is the distribution data (120) at the first axis coordinate according to the tool condition.

With the above configuration 4), the image data, which includes only the pixel assigned with luminance within a range defined by the large luminance threshold (L) and the small luminance threshold (S) among the pixels of the photographed image (70) indicated by the combination of the second axis coordinate and the third axis coordinate, is acquired as the corresponding distribution data (120A). Consequently, the distribution data (120) as noise of the another object (98) other than the tool (40) included in the photographed image data is removed. The determination unit (56) determines whether the tool condition is satisfied, based on the corresponding distribution data (120A). Accordingly, the tool check device (50) for robot arm can accurately determine whether the tool condition is satisfied.

5) In some embodiments, the tool check device (50) for robot arm as defined in the above 3) or 4), includes: a posture acquisition unit (52) configured to acquire posture data indicating a posture of the 3D camera (8) in the inspection space (99). The distribution data acquisition unit (55) is configured to acquire the distribution data (120) in the photographed image which is a partial region, of an original photographed image photographed by the 3D camera (8), determined based on the posture data.

With the above configuration 5), the photographed image (70) reflecting the deviation in posture of the 3D camera (8) is acquired, and the distribution data (120) of the photographed image (70) is acquired. Therefore, the tool (40) appears at the prescribed position of the photographed image (70) if the tool condition is satisfied. Therefore, the determination unit (56) can more accurately determine whether the tool condition is satisfied.

6) In some embodiments, the tool check device (50) for robot arm as defined in any of the above 1) to 5), wherein the determination unit (56) is configured to determine whether the tool condition is satisfied, based on a distribution area of the object (98) indicated by the distribution data (120).

The distribution area of the object (98) indicated by the distribution data (120) changes depending on whether the tool condition is satisfied. For example, the distribution area of the distribution data (120) deviates from a proper value or a proper range if the tool (40) of an inappropriate type is attached to the robot arm (30) or the tool (40) in an inappropriate state such as being damaged is attached to the robot arm (30). Since the distribution area of the object (98) thus changes greatly depending on whether the tool condition is satisfied, the tool check device (50) can simplify the process of determining whether the tool condition is satisfied.

7) In some embodiments, the tool check device (50) for robot arm as defined in the above 6), wherein the determination unit (56) is configured to identify a limited region (88) based on a centroid position of a distribution region indicated by the distribution data (120), and is configured to determine whether the tool condition is satisfied, based on the distribution area in the limited region (88).

With the above configuration 7), if the centroid position of the distribution region where the tool condition is satisfied and the limited region (88) where distribution area changes depending on whether the tool condition is satisfied are set in association with each other, the determination unit (56) can determine whether the tool condition is satisfied, based on the distribution area in the limited region (88). Accordingly, the determination unit (56) can make the appropriate determination according to the tool condition to be determined.

8) In some embodiments, the tool check device (50) for robot arm as defined in any of the above 1) to 7), wherein the determination unit (56) is configured to determine whether the tool condition is satisfied, based on a relationship between the second axis coordinate and a length of a distribution region indicated by the distribution data (120) in a third axis direction of the three-dimensional coordinate system.

With the above configuration 8), if the relationship between the second axis coordinate and the length in the third axis direction of the distribution region in which the tool condition is satisfied is set in advance, the determination unit (56) can determine whether the tool condition is satisfied, based on this relationship. Accordingly, the determination unit (56) can make the appropriate determination according to the tool condition to be determined.

9) A tool check program (95) for robot arm according to at least one embodiment of the present disclosure, is configured to cause a computer to implement: a movement control step (S13) of controlling a robot arm (30) such that a tool (40) to be attached to the robot arm (30) is arranged at a first axis coordinate, of a three-dimensional coordinate system, according to a tool condition concerning at least either of a type or a state of the tool (40) in an inspection space (99) defined as the three-dimensional coordinate system; a distribution data acquisition step (S17) of acquiring distribution data (120), of an object (98) in the inspection space (99), indicated by a combination of a second axis coordinate and a third axis coordinate of the three-dimensional coordinate system, after the movement control step (S13); and a determination step (S19) of determining whether the tool condition is satisfied, based on the distribution data (120).

With the above configuration 9), for the same reason as the above 1), the tool check program (95) for robot arm is realized which can accurately determine whether the tool condition is satisfied.

10) A tool check method for robot arm according to at least one embodiment of the present disclosure, includes: a movement control step (S13) of controlling a robot arm (30) such that a tool (40) to be attached to the robot arm (30) is arranged at a first axis coordinate, of a three-dimensional coordinate system, according to a tool condition concerning at least either of a type or a state of the tool (40) in an inspection space (99) defined as the three-dimensional coordinate system; a distribution data acquisition step (S17) of acquiring distribution data (120), of an object (98) in the inspection space (99), indicated by a combination of a second axis coordinate and a third axis coordinate of the three-dimensional coordinate system, after the movement control step (S13); and a determination step (S 19) of determining whether the tool condition is satisfied, based on the distribution data (120).

With the above configuration 10), for the same reason as the above 1), the tool check method for robot arm is realized which can accurately determine whether the tool condition is satisfied.

### Reference Signs List

- 8:: 3D camera
- 8A:: Photographing range
- 30:: Robot arm
- 40:: Tool
- 50:: Tool check device
- 52:: Posture acquisition unit
- 53:: Movement control unit
- 55:: Distribution data acquisition unit
- 56:: Determination unit
- 70:: Photographed image
- 88:: Limited region
- 95:: Tool check program
- 98:: Object
- 99:: Inspection space
- 120:: Distribution data
- 120A:: Corresponding distribution data
- S:: Small luminance threshold
- L:: Large luminance threshold

## Claims

1. A tool check device for robot arm, comprising:
a movement control unit configured to control a robot arm such that a tool to be attached to the robot arm is arranged at a first axis coordinate, of a three-dimensional coordinate system, according to a tool condition concerning at least either of a type or a state of the tool in an inspection space defined as the three-dimensional coordinate system;
a distribution data acquisition unit configured to acquire distribution data, of an object in the inspection space, indicated by a combination of a second axis coordinate and a third axis coordinate of the three-dimensional coordinate system, after the control by the movement control unit; and
a determination unit configured to determine whether the tool condition is satisfied, based on the distribution data.

2. The tool check device for robot arm according to claim 1,
wherein the distribution data acquisition unit is configured to perform, on the distribution data, a filtering process for extracting corresponding distribution data which is the distribution data at the first axis coordinate according to the tool condition, and
wherein the determination unit is configured to determine whether the tool condition is satisfied, based on the corresponding distribution data.

3. The tool check device for robot arm according to claim 1 or 2,
wherein the distribution data is data included in photographed image data of the object, which is generated by a 3D camera whose photographing range is the inspection space, and is data associating each of a plurality of pixels forming a photographed image indicated by the combination of the second axis coordinate and the third axis coordinate with a luminance value correlated with a distance from the object to the 3D camera.

4. The tool check device for robot arm according to claim 3,
wherein the distribution data acquisition unit is configured to perform a binarization process on the photographed image data generated by the 3D camera, by using a large luminance threshold and a small luminance threshold according to the tool condition, and is configured to acquire corresponding distribution data which is the distribution data at the first axis coordinate according to the tool condition.

5. The tool check device for robot arm according to claim 3 or 4, comprising:
a posture acquisition unit configured to acquire posture data indicating a posture of the 3D camera in the inspection space,
wherein the distribution data acquisition unit is configured to acquire the distribution data in the photographed image which is a partial region, of an original photographed image photographed by the 3D camera, determined based on the posture data.

6. The tool check device for robot arm according to any one of claims 1 to 5,
wherein the determination unit is configured to determine whether the tool condition is satisfied, based on a distribution area of the object indicated by the distribution data.

7. The tool check device for robot arm according to claim 6,
wherein the determination unit is configured to identify a limited region based on a centroid position of a distribution region indicated by the distribution data, and is configured to determine whether the tool condition is satisfied, based on the distribution area in the limited region.

8. The tool check device for robot arm according to any one of claims 1 to 7,
wherein the determination unit is configured to determine whether the tool condition is satisfied, based on a relationship between the second axis coordinate and a length of a distribution region indicated by the distribution data in a third axis direction of the three-dimensional coordinate system.

9. A tool check program for robot arm,
configured to cause a computer to implement:
a movement control step of controlling a robot arm such that a tool to be attached to the robot arm is arranged at a first axis coordinate, of a three-dimensional coordinate system, according to a tool condition concerning at least either of a type or a state of the tool in an inspection space defined as the three-dimensional coordinate system;
a distribution data acquisition step of acquiring distribution data, of an object in the inspection space, indicated by a combination of a second axis coordinate and a third axis coordinate of the three-dimensional coordinate system, after the movement control step; and
a determination step of determining whether the tool condition is satisfied, based on the distribution data.

10. A tool check method for robot arm, comprising:
a movement control step of controlling a robot arm such that a tool to be attached to the robot arm is arranged at a first axis coordinate, of a three-dimensional coordinate system, according to a tool condition concerning at least either of a type or a state of the tool in an inspection space defined as the three-dimensional coordinate system;
a distribution data acquisition step of acquiring distribution data, of an object in the inspection space, indicated by a combination of a second axis coordinate and a third axis coordinate of the three-dimensional coordinate system, after the movement control step; and
a determination step of determining whether the tool condition is satisfied, based on the distribution data.
